# EUROPEAN PATENT APPLICATION

(11) **EP 4 806 726 A1**
(43) Date of publication of application: **16.09.2026**
(21) Application number: 26162736.8
(22) Date of filing: 05.03.2026
(51) Int. Cl.: B60R 5/04, B60R 13/01

(54) **VEHICLE REAR PORTION STRUCTURE**

(30) Priority: 11.03.2025 JP 2025038184
(71) Applicant: Suzuki Motor Corporation, Hamamatsu-shi, Shizuoka 432-8611 (JP)
(72) Inventor: IMAI, Yusuke, Hamamatsu-shi, 432-8611 (JP)
(74) Representative: Plasseraud IP

(57) **Abstract**

Provided is a vehicle rear portion structure capable of improving usability of a luggage compartment.

[Means to Solve the Problems]A vehicle rear portion structure (100) includes: a rear floor (102) of a vehicle; a battery structure disposed above the rear floor (102); a toolbox (120) disposed behind the battery structure and configured to store a predetermined item; and a luggage board (106) covering the battery structure and the toolbox (120) from above and forming a floor of a luggage compartment of the vehicle. The luggage board (106) includes a fixed portion (126) fixed to the vehicle and forming the floor of the luggage compartment, and a plurality of opening/closing portions forming the floor of the luggage compartment in an openable/closable manner. The plurality of opening/closing portions include a first opening/closing portion (128) provided in a region covering the upper side of the toolbox (120) and a second opening/closing portion (130) provided in a region covering the upper side of an auxiliary battery (116).

## Description

### [Field of the Invention]

The present invention relates to a vehicle rear portion structure.

### [Background of the Invention]

A rear floor of a vehicle is often equipped with a battery that supplies power to a power unit such as a motor. For example, FIG. 2 of Patent Document 1 discloses an arrangement where a vehicle drive battery 6 is mounted on the floor panel 8, behind a rear seat 4.

### [Prior Art Documents]

### [Patent Documents]

[Patent Document 1] JP 5929696B

### [Summary of the Invention]

### [Problems to be Solved by the Invention]

In the technique of Patent Document 1, a luggage compartment 2 is formed behind a battery accommodation space 5. A floor surface of the luggage compartment 2 is formed by a floorboard 27, which is a component different from the floor panel 8. However, since the arrangement of structural components around the rear floor varies from vehicle to vehicle, there is room for improvement in the use of board members such as the floorboard 27 in the luggage compartment in Patent Document 1.

In view of the above problems, an object of the present invention is to provide a vehicle rear portion structure capable of providing a highly convenient luggage compartment.

### [Means to Solve the Problems]

In order to solve the above problem, a representative configuration of a vehicle rear portion structure according to the present invention is a vehicle rear portion structure including: a rear floor of a vehicle; a battery structure disposed above the rear floor; a toolbox disposed behind the battery structure and configured to store a predetermined item; and a luggage board covering the upper side of the battery structure and the toolbox, and forming a floor of a luggage compartment of the vehicle, wherein the luggage board includes: a fixed portion fixed to the vehicle and forming the floor of the luggage compartment; and a plurality of opening/closing portions forming the floor of the luggage compartment in an openable/closable manner, and the plurality of opening/closing portions include a first opening/closing portion provided in a region covering the upper side of the toolbox and a second opening/closing portion provided in a region covering the upper side of the battery structure.

### [Effect of the Invention]

According to the present invention, it is possible to provide a vehicle rear portion structure that can improve the convenience of a luggage compartment.

### [Brief Explanation of the Drawings]

FIG. 1 is a diagram showing a vehicle rear portion structure according to an example of the present invention.
FIG. 2 is a diagram showing the vehicle rear portion structure in FIG. 1(a) as seen from a different direction.
FIG. 3 is an exploded view of the vehicle rear portion structure in FIG. 2(b).
FIG. 4 is a diagram of the vehicle rear portion structure in FIG. 2(a) as seen from above.
FIG. 5 is a diagram showing a state where the opening/closing portions of the luggage board in FIG. 4(a) are open.
FIG. 6 is a cross-sectional view of the vehicle rear portion structure in FIG. 4(a).
FIG. 7 is a cross-sectional view of a first opening/closing portion in FIG. 4(a).
FIG. 8 is a diagram showing a second opening/closing portion of FIG. 4(a).

### [Embodiments of the Invention]

A vehicle rear portion structure according to an example of the present invention is a vehicle rear portion structure including: a rear floor of a vehicle; a battery structure disposed above the rear floor; a toolbox disposed behind the battery structure and configured to store a predetermined item; and a luggage board covering the upper side of the battery structure and the toolbox, and forming a floor of a luggage compartment of the vehicle, wherein the luggage board includes: a fixed portion fixed to the vehicle and forming the floor of the luggage compartment; and a plurality of opening/closing portions forming the floor of the luggage compartment in an openable/closable manner, and the plurality of opening/closing portions include a first opening/closing portion provided in a region covering the upper side of the toolbox and a second opening/closing portion provided in a region covering the upper side of the battery structure.

According to the above configuration, the luggage board makes it possible to utilize a space above the battery structure and the toolbox as the luggage compartment. In particular, the luggage board is provided with a first opening/closing portion and a second opening/closing portion. Therefore, without unloading the luggage outside the vehicle or removing the entire luggage board, it is possible to use the toolbox or perform work on the battery structure simply by moving the luggage to the fixed portion and opening the first and second opening/closing portions. Therefore, according to the above configuration, a highly convenient luggage compartment can be provided.

A configuration is also possible in which the battery structure includes: a predetermined main battery; and an auxiliary battery that is smaller than the main battery, the main battery is disposed in a region including a center of the rear floor in a vehicle width direction, the auxiliary battery is disposed on a side of the main battery in the vehicle width direction, the toolbox is disposed behind the main battery and the auxiliary battery, and the second opening/closing portion is provided in a region covering the upper side of the auxiliary battery and a portion of the toolbox.

According to the above configuration, opening the second opening/closing portion enables work on the auxiliary battery and use of the toolbox.

A configuration is also possible in which the fixed portion is provided in a region covering the upper side of the main battery, the first opening/closing portion is adjacent to a rear side of the fixed portion, the second opening/closing portion is adjacent to a lateral side of the first opening/closing portion, and the luggage board further includes: a hinge portion that connects a front end of the first opening/closing portion to the fixed portion; and a fitting portion that is provided at an end portion of the first opening/closing portion on the second opening/closing portion side, and is fitted to the second opening/closing portion from above.

According to the above configuration, the first opening/closing portion can be opened and closed via the hinge portion without removal. Furthermore, by fitting the first fitting portion of the first opening/closing portion with the second opening/closing portion, displacement of the second opening/closing portion can be prevented.

A configuration is also possible in which the plurality of opening/closing portions further include a third opening/closing portion that is adjacent to the first opening/closing portion on a side opposite to the second opening/closing portion in the vehicle width direction and that covers a region above another portion of the toolbox.

According to the above configuration, by providing the third opening/closing portion on the luggage board, a wider area of the toolbox can be used without removing the luggage board.

A configuration is also possible in which the luggage board further includes another fitting portion provided at the fixed portion and fitted to the second opening/closing portion from above or below.

By the other fitting portions provided on the fixed portion fitting with the second opening/closing portion, displacement of the second opening/closing portion can be further prevented.

### Example

A preferable example of the present invention will be described in detail below with reference to the attached drawings. Dimensions, materials, other specific values, and the like described in this example are merely examples for facilitating understanding of the invention, and are not intended to limit the present invention unless stated otherwise. Note that in the present specification and drawings, elements having substantially the same functions and configurations are assigned the same reference numerals and redundant descriptions are omitted. Elements that are not directly related to the present invention are omitted in the drawings.

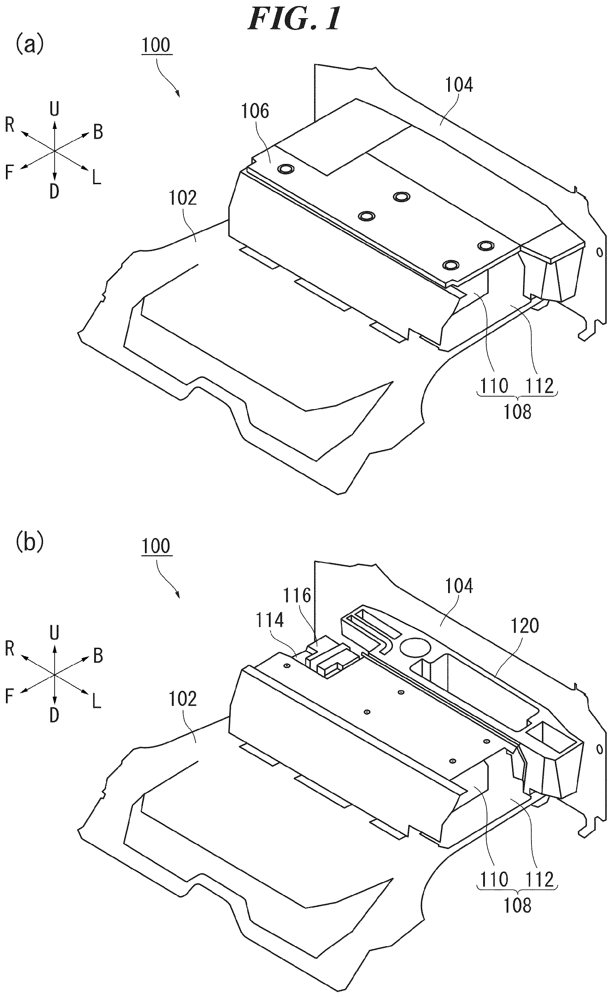

FIG. 1 is diagram showing a vehicle rear portion structure 100 according to an example of the present invention. FIG. 1(a) is a perspective view of the vehicle rear portion structure 100 as seen from the front left upper side.

Hereinafter, in FIG. 1 and all of the other drawings of the present application, the arrows F (Forward) and B (Backward) indicate the front and rear directions of the vehicle, the arrows L (Leftward) and R (Rightward) indicate the left and right directions in the width direction of the vehicle, and the arrows U (Upward) and D (Downward) indicate the up and down directions of the vehicle.

The vehicle rear portion structure 100 includes a rear floor 102, a rear member 104, and a luggage board 106. The rear floor 102 is a panel member that forms the floor of the vehicle rear portion. The rear member 104 is a general term for members connected to the rear end of the rear floor 102, and includes, for example, a back panel or a tail end member.

The luggage board 106 is a member that forms the floor of the luggage component. The luggage board 106 covers a region above a battery structure, such as a main battery assembly 108, and a toolbox 120, thereby making it possible to use a space in front of the rear member 104 as a luggage compartment.

FIG. 1(b) shows the vehicle rear portion structure 100 in FIG. 1(a) with the luggage board 106 removed.

The vehicle rear portion structure 100 has a battery structure including the main battery assembly 108 and an auxiliary battery assembly 114 above the rear floor 102.

The main battery assembly 108 is a structure including a main battery 110 and a main battery frame 112. The main battery 110 is a large, high-voltage battery that supplies power to a power unit serving as a power source of the vehicle. The main battery assembly 108 is disposed on a region above the rear floor 102 that includes the center thereof in the vehicle width direction.

The main battery frame 112 is a member that encloses the main battery 108 and fixed to the rear floor 102 by means such as bolting.

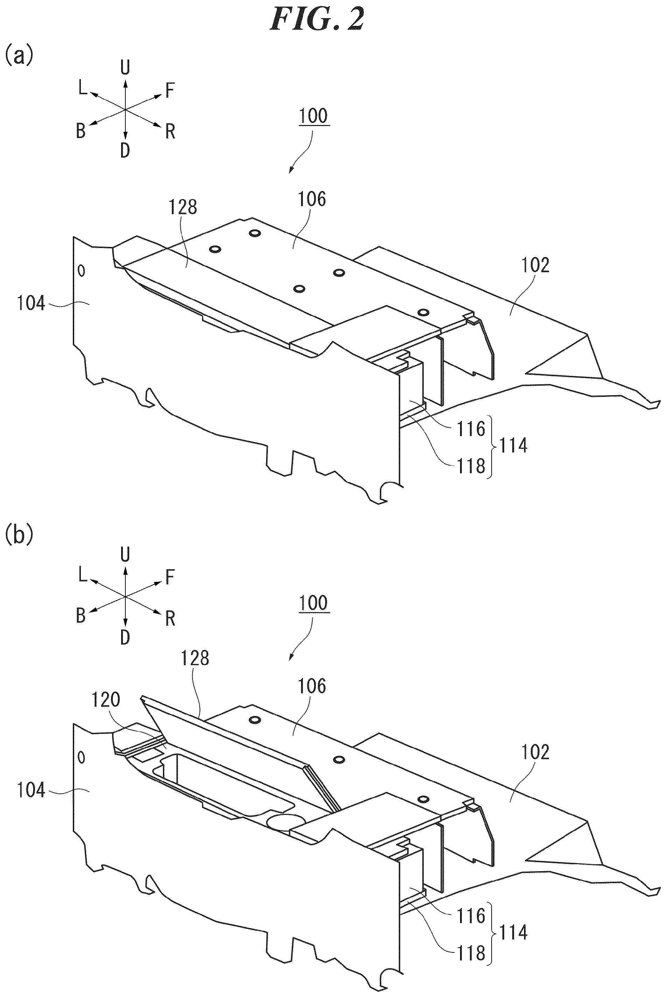

The auxiliary battery assembly 114 is a structure including an auxiliary battery 116 and an auxiliary battery tray 118 (see FIG. 2(a)). The auxiliary battery 116 is a battery that is smaller in size and lower in voltage than the main battery 110, and supplies power to electric components such as wipers and lights. The auxiliary battery assembly 114 is disposed above the rear floor 102, behind the right side of the main battery assembly 108 in the vehicle width direction.

The vehicle rear portion structure 100 includes the toolbox 120 as a storage component. The toolbox 120 is disposed in a region above the rear floor 102 that is behind the main battery assembly 108 and the auxiliary battery assembly 114. The toolbox 120 can be used as a storage location for various tools.

FIG. 2 is a diagram showing the vehicle rear portion structure 100 in FIG. 1(a) as seen from a different direction. FIG. 2(a) is a perspective view of the vehicle rear portion structure 100 shown in FIG. 1(a) as seen from the rear upper right side.

The luggage compartment formed by the luggage board 106 allows for loading and unloading of luggage through a rear door opening above the rear member 104.

FIG. 2(b) is a diagram showing the luggage board 106 of FIG. 2(a) with the first opening/closing portion open. The luggage board 106 has a plurality of opening/closing portions, such as a first opening/closing portion 128.

The first opening/closing portion 128 is formed in a region, of the luggage board 106, that is above the toolbox 120. The first opening/closing portion 128 allows the region above the toolbox 120 to be usually used as the luggage compartment, while enabling items stored in the toolbox 120 to be retrieved as needed.

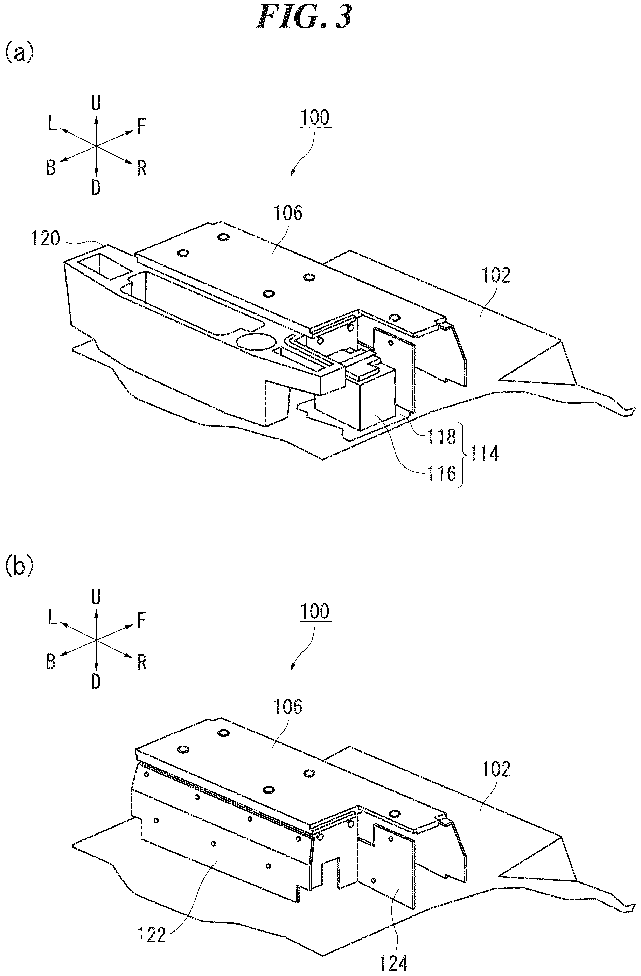

FIG. 3 is an exploded view of the vehicle rear portion structure 100 in FIG. 2(b). FIG. 3(a) is a diagram in which the opening/closing portions of the luggage board 106 and the rear member 104 in FIG. 2(b) are removed.

The toolbox 120 is adjacent to the rear side of the main battery assembly 108 and the auxiliary battery assembly 114.

In the auxiliary battery assembly 114, the auxiliary battery 116 is placed on the auxiliary battery tray 118 and fixed by a holder member or other means. The auxiliary battery tray 118 is fixed to the rear floor 102 by bolting or other means.

FIG. 3(b) shows a state where the toolbox 120 and the auxiliary battery assembly 114 have been removed from the state shown in FIG. 3(a).

The area surrounding the main battery assembly 108 is partitioned by partitioning portions. A first partitioning portion 122 is located behind the main battery assembly 108, separating the main battery assembly 108 from the toolbox 120. The first partitioning portion 122 can prevent items stored in the toolbox 120 from entering the main battery assembly 108 and prevents the user from accidentally touching high-voltage components.

A second partitioning portion 124 is provided on the front laterally inner side of the auxiliary battery assembly 114, partitioning the auxiliary battery assembly 114 from the main battery assembly 108. The second partitioning portion 124 can also prevent items stored in the toolbox 120 from entering the main battery assembly 108 and prevents the user from accidentally touching high-voltage components.

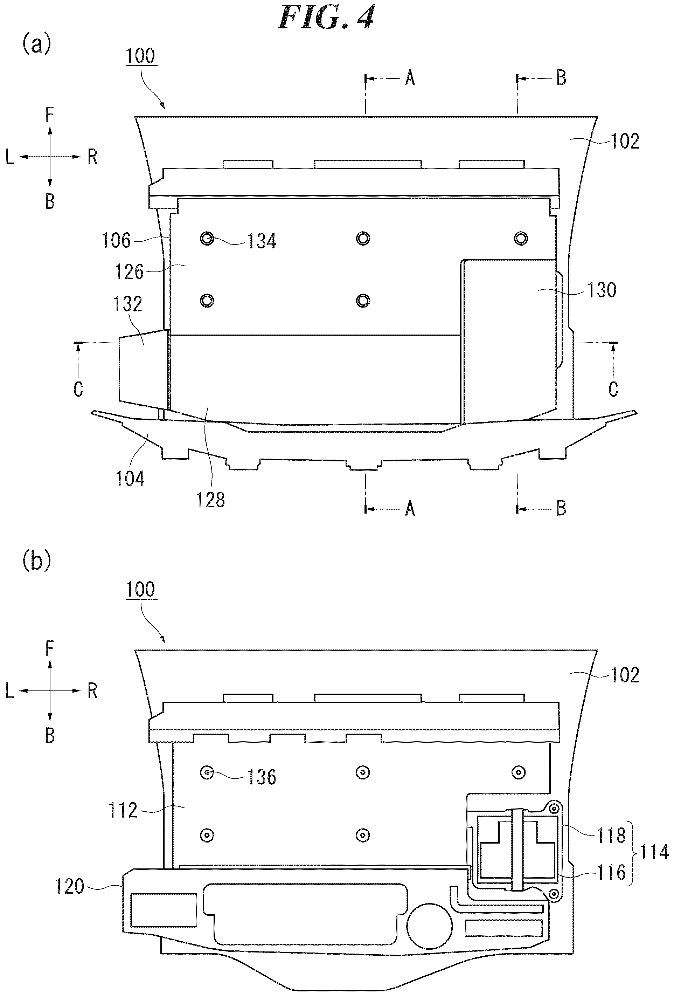

FIG. 4 is a view of the vehicle rear portion structure 100 in FIG. 2(a) as seen from above. FIG. 4(a) is a view of the vehicle rear portion structure 100 in the state shown in FIG. 2(a) as seen from above.

The luggage board 106 is divided into a fixed portion 126 and the respective opening/closing portions. The fixed portion 126 is a portion provided in a region covering the main battery assembly 108 (see FIG. 1(b)) from above. The fixed portion 126 is fixed to the main battery frame 112 (see FIG. 4(b)) by a plurality of clips 134. In this manner, the fixed portion 126 forms the floor of the luggage compartment while being fixed to the vehicle.

The plurality of opening/closing portions include the first opening/closing portion 128, a second opening/closing portion 130, and a third opening/closing portion 132. These opening/closing portions form the floor of the luggage compartment while being openable and closable.

The first opening/closing portion 128 is adjacent to the rear side of the fixed portion 126. The second opening/closing portion 130 is adjacent to the right side of the first opening/closing portion 128 in the vehicle width direction. The third opening/closing portion 132 is located on the opposite side to the second opening/closing portion 130 in the vehicle width direction, and is adjacent to the left side of the first opening/closing portion 128 in the vehicle width direction.

The third opening/closing portion 132 protrudes to the left in the vehicle width direction relative to the fixed portion 126. The left end portion of the third opening/closing portion 132 and the lower toolbox 120 can be disposed in a region between the rear member 104 and the rear wheelhouse (not shown).

FIG. 4(b) shows the vehicle rear portion structure 100 with the luggage board 106 and rear member 104 removed from the state shown in FIG. 4(a).

The fixed portion 126 (see FIG. 4(a)) is mounted on the main battery frame 112. A plurality of attachment holes 136 for attaching the fixed portion 126 of the luggage board 106 are provided on the upper portion of the main battery frame 112.

The first opening/closing portion 128 (see FIG. 4(a)) is provided in a region covering the upper side of the central portion of the toolbox 120. The second opening/closing portion 130 is provided in a region covering the upper side of the auxiliary battery assembly 114 and the upper side of the right edge portion of the toolbox 120. The third opening/closing portion 132 is provided in a region covering the upper side of the left end portion of the toolbox 120.

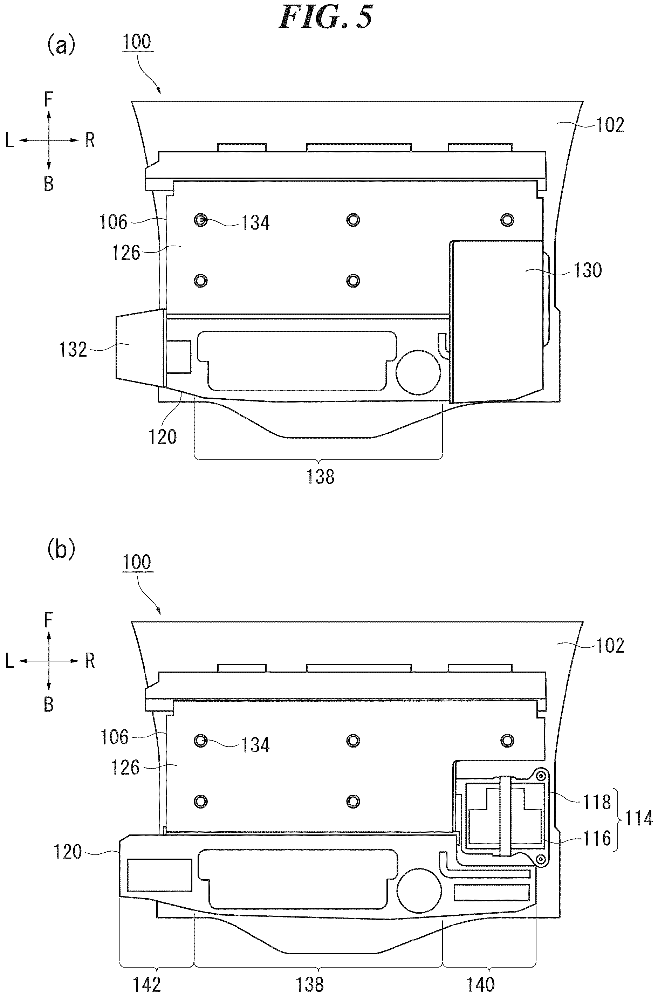

FIG. 5 shows the luggage board 106 in FIG. 4(a) with the opening/closing portions open. FIG. 5(a) is a diagram showing the first opening/closing portion 128 in FIG. 4(a) in the open state.

Opening the first opening/closing portion 128 (see FIG. 4(a)) enables use of a central storage portion 138 of the toolbox 120. The central storage portion 138 can store tools such as a flat tire repair kit.

FIG. 5(b) shows the second opening/closing portion 130 and the third opening/closing portion 132 of FIG. 5(a) in the open state.

Opening the second opening/closing portion 130 (see FIG. 5(a)) exposes the auxiliary battery 116 and a right storage portion 140 of the toolbox 120. This allows work to be performed on the auxiliary battery 116 or items to be removed from the right storage portion 140. Since the second opening/closing portion 130 can be opened and closed in this manner, maintenance tasks such as replacing the auxiliary battery 116 or checking its fluid levels can be performed without removing the entire luggage board 106.

Opening the third opening/closing portion 132 (see FIG. 5(a)) exposes a left storage portion 142 of the toolbox 120. In this manner, the stored items can be removed from the left storage portion 142.

The second opening/closing portion 130 (see FIG. 5(a)) and the third opening/closing portion 132 enable the use of a wider area of the toolbox 120 without removing the luggage board 106. Furthermore, the third opening/closing portion 132 enables the space between the rear member 104 and the rear wheelhouse (not shown) to be utilized as a luggage compartment.

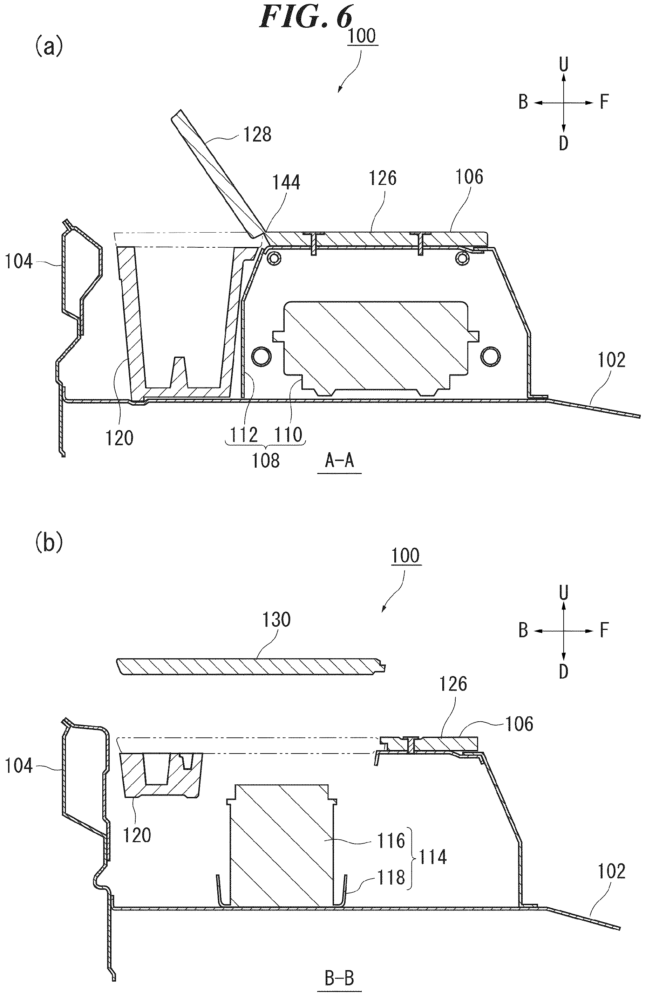

FIG. 6 is a cross-sectional view of the vehicle rear portion structure 100 in FIG. 4(a). FIG. 6(a) is a cross-sectional view of the vehicle rear portion structure 100 taken along line A-A in FIG. 4(a). FIG. 6(a) shows the first opening/closing portion 128 in the open state.

The fixed portion 126 is mounted on the battery frame 112. This allows the fixed portion 126 to be supported by the battery frame 112, enabling it to function as the floor of the luggage compartment taking advantage of the rigidity of the battery frame 112.

The luggage board 106 has a hinge portion 144. The hinge portion 144 connects the front end of the first opening/closing portion 128 to the fixed portion 126, making it possible to open and close the first opening/closing portion 128 by a rotating movement. Due to the hinge portion 144, the first opening/closing portion 128 can be opened and closed without being detached from the fixed portion 126.

The first opening/closing portion 128 is placed on the toolbox 120 in the closed state. This allows the first opening/closing portion 128 to be supported by the toolbox 120, so that the first opening/closing portion 128 can function as the floor of the luggage compartment while taking advantage of the rigidity of the toolbox 120.

FIG. 6(b) is a cross-sectional view of the vehicle rear portion structure 100 taken along line B-B in FIG. 4(a). FIG. 6(b) shows the second opening/closing portion 130 in the open state.

The second opening/closing portion 130 can be detached from the fixed portion 126 and opened. When performing work on the auxiliary battery assembly 114, the detachable design of the second opening/closing portion 130 improves work efficiency.

In the closed state, the rear end side of the second opening/closing portion 130 is placed on the toolbox 120. This allows the second opening/closing portion 130 to be supported by the toolbox 120, so that it can function as the floor of the luggage compartment while taking advantage of the rigidity of the toolbox 120.

As described above, the vehicle rear portion structure 100 provides the luggage compartment above the battery structure, such as the main battery assembly 108, and the toolbox 120, using the luggage board 106. Specifically, the luggage board 106 is provided with the first opening/closing portion 128 and the second opening/closing portion 130. Therefore, without unloading luggage outside the vehicle or removing the entire luggage board 106, by simply moving luggage to the fixed portion 126 and opening the first opening/closing portion 128 and the second opening/closing portion 130, the toolbox 120 can be used and work can be performed on the battery structure. Thus, with this vehicle rear portion structure 100, it is possible to provide a highly convenient luggage compartment.

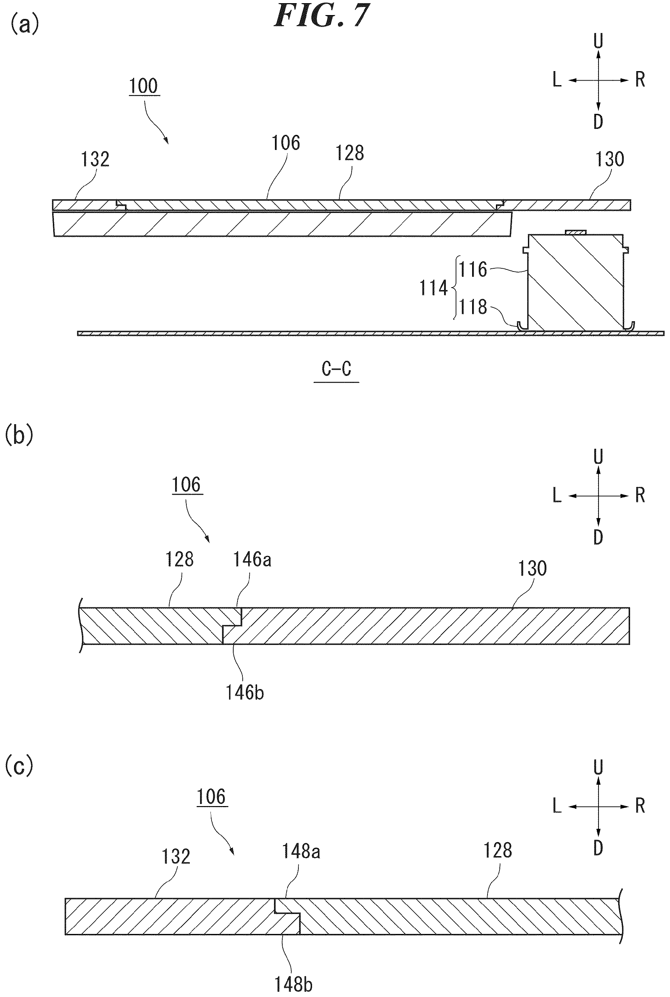

FIG. 7 is a cross-sectional view of the first opening/closing portion 128 in FIG. 4(a). FIG. 7(a) is a cross-sectional view of the first opening/closing portion 128 taken along a line C-C in FIG. 4(a). As described above, the first opening/closing portion 128 covers a region on the upper side of the central storage portion 138 (see FIG. 5(a)) of the toolbox 120.

FIG. 7(b) is an enlarged view of the right end of the first opening/closing portion 128 shown in FIG. 7(a). A fitting portion 146a is provided at the end of the first opening/closing portion 128 on the second opening/closing portion 130 side.

The fitting portion 146a has a shape in which an upper side thereof protrudes and a lower side thereof is recessed. The second opening/closing portion 130 has a corresponding fitting portion 146b. The fitting portion 146b has a shape in which the upper side protrudes and the lower side is recessed.

The fitting portion 146a of the first opening/closing portion 128 is fitted to the fitting portion 146b of the second opening/closing portion 130 from above. Therefore, when the first opening/closing portion 128 is closed using the motion of the hinge portion 144 (see FIG. 6(a)), the fitting portion 146a is fitted to the fitting portion 146b, making it possible to prevent displacement of the second opening/closing portion 130.

FIG. 7(c) is an enlarged view of the left end of the first opening/closing portion 128 in FIG. 7(b). A fitting portion 148a is provided at an end portion of the first opening/closing portion 128 on the third opening/closing portion 132 side.

The fitting portion 148a also has a shape in which the upper side protrudes and the lower side is recessed. The third opening/closing portion 132 has a corresponding fitting portion 148b. The fitting portion 148b has a shape in which the upper side is recessed and the lower side protrudes.

The fitting portion 148a of the first opening/closing portion 128 is fitted to the fitting portion 148b of the third opening/closing portion 132 from above. Therefore, when the first opening/closing portion 128 is closed using the motion of the hinge portion 144 (see FIG. 6(a)), the fitting portion 148a is fitted to the fitting portion 148b, making it possible to prevent displacement of the third opening/closing portion 132.

Note that a configuration is also possible in which the first opening/closing portion 128 is attachable and detachable, similarly to the second opening/closing portion 130, for example, instead of being opened and closed using a hinge. Even if the first opening/closing portion 128 is configured to be detachable, by providing the fitting portions 146a and 148a, the first opening/closing portion 128 can be fitted to the second opening/closing portion 130 and the third opening/closing portion 132, making it possible to prevent displacement.

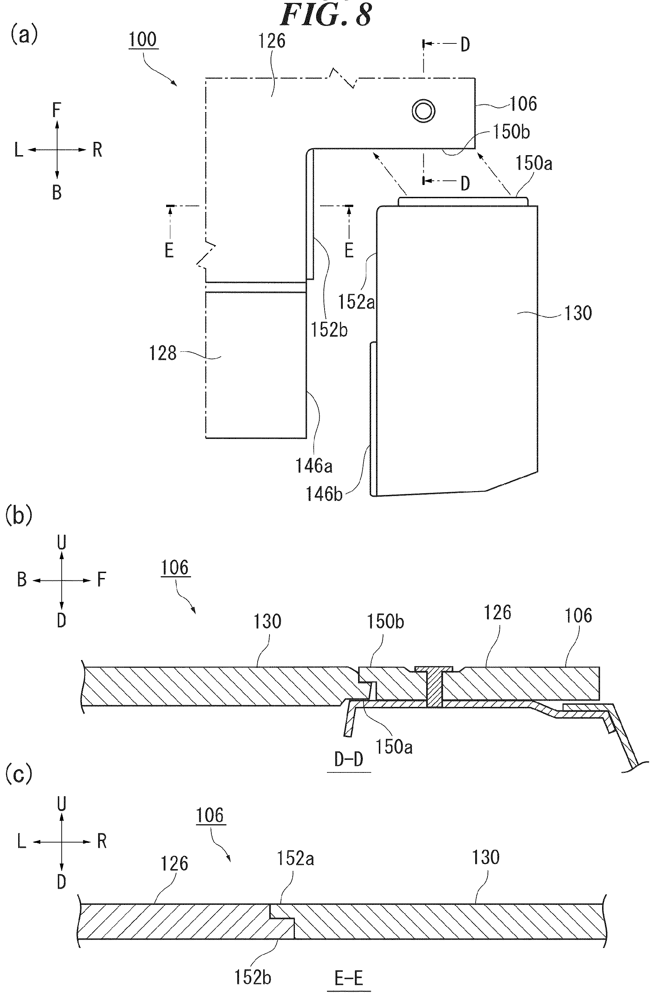

FIG. 8 is a diagram showing the second opening/closing portion 130 in FIG. 4(a). FIG. 8(a) is an enlarged view of the second opening/closing portion 130 in FIG. 4(b). FIG. 8(a) shows the second opening/closing portion 130 in the open state.

The second opening/closing portion 130 includes fitting portions 150a and 152a to be fitted to the fixed portion 126. The fixed portion 126 is provided with the corresponding fitting portions 150b and 152b.

FIG. 8(b) is a cross-sectional view of the fitting portion 150b of the fixed portion 126 in FIG. 8(a) taken along a line D-D. FIG. 8(b) shows the second opening/closing portion 130 in the closed state.

The fitting portion 150a of the second opening/closing portion 130 has a shape in which the upper side is recessed and the lower side protrudes. The fitting portion 150b of the fixed portion 126 has a shape in which the upper side protrudes and the lower side is recessed.

The fitting portion 150a of the second opening/closing portion 130 can be fitted to the fitting portion 150b of the fixed portion 126 by inserting it obliquely from the upper rear side.

FIG. 8(c) is a cross-sectional view of the fitting portion 152b of the fixed portion 126 in FIG. 8(a) taken along a line E-E. FIG. 8(c) also shows the second opening/closing portion 130 in the closed state.

The fitting portion 152a of the second opening/closing portion 130 has a shape in which the upper side protrudes and the lower side is recessed. The fitting portion 152b of the fixed portion 126 has a shape in which the upper side is recessed and the lower side protrudes.

The fitting portion 152a of the second opening/closing portion 130 can be fitted to the fitting portion 152b of the fixed portion 126 from above. That is, the second opening/closing portion 130 is configured such that the fitting portion 150a on the side portion is fitted to the fitting portion 152b of the fixed portion 126 from above by inserting the fitting portion 150a on the front side (see FIG. 8(b)) into the fitting portion 150b of the fixed portion 126 and fixing the fitting portions 150a and 150b.

As described above, the fitting portions 150a and 152a of the second opening/closing portion 130 are configured to be fitted to the fitting portions 150b and 152b of the fixed portion 126 from below and above, respectively. This makes it possible to prevent displacement of the second opening/closing portion 130 relative to the fixed portion 126 when the second opening/closing portion 130 is closed.

While preferred examples of the present invention have been described with reference to the attached drawings, it goes without saying that the present invention is not limited to these examples. It is obvious that those skilled in the art will be able to arrive at various changes and modifications within the scope of the claims, and such changes and modifications are understood to naturally fall within the technical range of the present invention.

### [Industrial Applicability]

The present invention can be used in a vehicle rear portion structure.

### [Index to the Reference Numerals]

100 ... Vehicle rear portion structure; 102 ... Rear floor; 104 ... Rear member; 106 ... Luggage board; 108 ... Main battery assembly; 110 ... Main battery; 112 ... Main battery frame; 114 ... Auxiliary battery assembly; 116 ... Auxiliary battery; 118 ... Auxiliary battery tray; 120 ... Toolbox; 122 ... First partition wall; 124 ... Second partition wall; 126 ... Fixed portion; 128 ... First opening/closing portion; 130 ... Second opening/closing portion; 132 ... Third opening/closing portion; 134 ... Clip; 136 ... Attachment hole; 138 ... Central storage portion; 140 ... Right storage portion; 142 ... Left storage portion; 144 ... Hinge portion; 146a, 146b ... Fitting portion; 148a, 148b ... Fitting portion; 150a, 150b ... Fitting portion; 152a 152b ... Fitting portion

## Claims

1. A vehicle rear portion structure (100) comprising:
a rear floor (102) of a vehicle;
a battery structure (108) disposed above the rear floor (102);
a toolbox (120) disposed behind the battery structure (108) and configured to store a predetermined item; and
a luggage board (106) covering the upper side of the battery structure (108) and the toolbox (120), and forming a floor of a luggage compartment of the vehicle,
wherein the luggage board (106) includes:
a fixed portion (126) fixed to the vehicle and forming the floor of the luggage compartment; and
a plurality of opening/closing portions (128,130,132) forming the floor of the luggage compartment in an openable/closable manner, and
the plurality of opening/closing portions (128,130,132) include
a first opening/closing portion (128) provided in a region covering the upper side of the toolbox (120) and
a second opening/closing portion (130) provided in a region covering the upper side of the battery structure (108).

2. The vehicle rear portion structure (100) according to claim 1,
wherein the battery structure (108) includes:
a predetermined main battery (110); and
an auxiliary battery (116) that is smaller than the main battery (110),
the main battery (110) is disposed in a region including a center of the rear floor (102) in a vehicle width direction,
the auxiliary battery (116) is disposed on a side of the main battery (110) in the vehicle width direction,
the toolbox (120) is disposed behind the main battery (110) and the auxiliary battery (116), and
the second opening/closing portion (130) is provided in a region covering the upper side of the auxiliary battery (116) and a portion of the toolbox (120).

3. The vehicle rear portion structure (100) according to claim 2,
wherein the fixed portion (126) is provided in a region covering the upper side of the main battery (110),
the first opening/closing portion (128) is adjacent to a rear side of the fixed portion (126),
the second opening/closing portion (130) is adjacent to a lateral side of the first opening/closing portion (128), and
the luggage board (106) further includes:
a hinge portion (144) that connects a front end of the first opening/closing portion (128) to the fixed portion (126); and
a fitting portion (146a) that is provided at an end portion of the first opening/closing portion (128) on the second opening/closing portion (124) side, and is fitted to the second opening/closing portion (124) from above.

4. The vehicle rear portion structure (100) according to claim 2, wherein the plurality of opening/closing portions (128, 130, 132) further include a third opening/closing portion (132) that is adjacent to the first opening/closing portion (128) on a side opposite to the second opening/closing portion (130) in the vehicle width direction and that covers a region above another portion of the toolbox (120).

5. The vehicle rear portion structure (100) according to claim 3, wherein the luggage board (106) further includes another fitting portion (150b, 152b) provided at the fixed portion (126) and fitted to the second opening/closing portion (130) from above or below.
